# EUROPEAN PATENT APPLICATION

(11) **EP 1 338 369 A1**
(43) Date of publication of application: **27.08.2003**
(21) Application number: 01961297.7
(22) Date of filing: 31.08.2001
(51) Int. Cl.: B23K 9/12

(54) **CONSUMABLE ELECTRODE ARC WELDING METHOD AND WELDER**

(30) Priority: 31.08.2000 JP 2000263588; 31.08.2000 JP 2000263600
(71) Applicant: Air Water Inc., Sapporo-shi, Hokkaido 060-0003 (JP); Hitachi Construction Machinery Co., Ltd., Bunkyo-ku, Tokyo 112-8563 (JP)
(72) Inventor: IKEGAMI, Yuichi, Wakayama-shi, Wakayama 640-8137 (JP); YOKOYAMA, Takashi, Wakayama-shi, Wakayama 640-0112 (JP); NAKATA, Jitsuo, Wakayama-shi, Wakayama 640-8472 (JP); MIYAUCHI, Hideki, Choshi-shi, Chiba 288-0863 (JP); YAMAMOTO, Hikaru, Ryugasaki-shi, Ibaraki 301-0001 (JP); SENZAKI, Masafumi, Ushiku-shi, Ibaraki 300-1203 (JP)
(74) Representative: Fuchs Mehler Weiss & Fritzsche
(86) International application number: JP0107583
(87) International publication number: WO02018086

(57) **Abstract**

It is an object of the present invention to provide, in the double wire type welding method, a consumable electrode type arc welding method and welding apparatus for which the welding speed is sufficiently increased, and in particular the melting of steel such as carbon steel is increased and hence the welding speed is increased. With the present invention, a consumable electrode wire 1 is taken as the leading wire in the direction in which welding proceeds and a filler wire 2 is taken as the trailing wire, the consumable electrode wire 1 and the filler wire 2 are arranged approximately in parallel, and earthing is carried out from a welding power source 5, via a power feeding terminal 4a, from the consumable electrode wire 1, though an arc 12 and a molten pool 8, and from a parent material 3 by a parent material side earth wire 7; by placing an electrical resistor here, the current Ib flowing into the earth terminal of the welding power source 5 via the parent material 3 can be limited by the electrical resistor 20, and the ratio of the current If that is split off into the filler wire 2 to the welding current Iw can be raised; due to the increase in the split-off current, the amount of heat generation in the filler wire 2 increases, and thus even if the feeding rate of the filler wire 2 is increased there will not be a lack of Joule heat, and hence melt mixing of the filler wire 2 into the molten pool 8 can be carried out completely.

## Description

### TECHNICAL FIELD

The present invention relates to a consumable electrode type gas-shielded arc welding method for welding materials such as carbon steel, alloy steel and aluminum, specifically a consumable electrode type arc welding method wherein, in a double wire type arc welding method in which a filler wire is melted in addition to the consumable electrode, the amount of melting of the filler wire is increased and the welding speed is increased, and an apparatus using the method.

### BACKGROUND ART

In the case of the consumable electrode type arc welding method, which is widely used in the welding of materials such as alloy steel and aluminum, as a welding method developed with an object of improving welding speed, welding performance, work efficiency and welding quality, a double wire type arc welding method in which a filler wire is melted in addition to the consumable electrode has been proposed (Japanese Patent Publication No. 6-98494).

In this consumable electrode type arc welding method, to improve the welding speed and the welding performance, means has been adopted in which, behind the usual one electrode wire, one more wire (a filler wire) is added, and the filler wire is inserted into the molten pool formed when the electrode wire is melted by the arc heat, thus increasing the melting rate of the wire.

That is, means has been adopted in which, to increase the melting rate of the filler wire, the filler wire is inserted into the molten pool, and part of the welding current is split off into the filler wire, with confluence being made to take place at the earth terminal of the welding power source.

Moreover, with the above method, to improve the welding work efficiency so that a semi-automatic welding method can be implemented, the consumable electrode wire and the filler wire are arranged in parallel, with a suitable positional relationship therebetween being stipulated. That is, the constitution has been made to be such that the consumable electrode wire and the filler wire are arranged in parallel with the consumable electrode wire as a leading wire and the filler wire as a trailing wire, and the two wires in the shield nozzle are inserted into the molten pool under the condition that the angle between the leading wire and the trailing wire is a maximum of 20°.

According to the above method, when an aluminum material is welded, it becomes possible to melt a lot of aluminum at the place that one wishes to weld and carry out welding at a single stroke with a large welding amount, and thus the welding speed and the welding performance are excellent, and hence this method is widely used, for example in the welding of Shinkansen train coach bodies and various aluminum containers.

In the case that the above double wire type welding method is applied to normal steel, there is a problem that the melting temperature of steel is high at about 1500°C compared to about 660°C for aluminum, and hence the filler wire melts with difficulty, and thus it is difficult to gain the advantage of high-quality welding at high efficiency becoming possible as is the case with welding of an aluminum material as described above.

### DISCLOSURE OF THE INVENTION

It is an object of the present invention to provide, in the case of the double wire type welding method described above, a consumable electrode type arc welding method and welding apparatus for which the welding speed is sufficiently increased, and in particular the melting of steel such as carbon steel is increased and hence the welding speed is increased.

The present inventors discovered that, due to the difference in the melting temperature of steel, even if the welding current is increased compared with the case of aluminum, the temperature of the molten pool into which the filler wire is inserted may drop to about 1500°C, which is close to the melting temperature of steel. To prevent this drop in the temperature of the molten pool and enable a temperature to be maintained such that the filler wire melts sufficiently, the present inventors thus carried out various studies into increasing the melting heat amount in the filler wire.

As a result, the present inventors discovered that by using a split-off current for which part of the main current flowing from the power source (plus side) of the welding apparatus to the electrode wire, the welding part and the power source (minus side) is branched off and flows through the filler wire in the opposite direction, or by using separate power source means, for example a direct current power source with the negative electrode connected to the filler wire side and the positive electrode connected to the welding power source (minus side), and thus controlling the current flowing through the filler wire to be a fixed value suited to the welding conditions, then the drop in the temperature of the molten pool can be eliminated and the welding speed can be increased sufficiently.

That is, because steel has a higher electrical resistance than aluminum, if a current of at least a certain value flows then heat is generated and the temperature becomes high, and hence focussing on using this as part of the heat source for melting, the present inventors discovered that by carrying out control such that the current flowing through the filler wire increases to a required value or is increased at required times, the object can be attained, thus accomplishing the present invention.

As the means for controlling the current flowing through the filler wire, means can be adopted for example in which an electrical resistor is placed between the parent material and the earth terminal of the welding power source, or the connection between the parent material and the earth terminal of the welding power source and between the filler wire and the earth terminal of the welding power source is turned on and off or switched.

Alternatively, separate power source means for controlling the above-mentioned current is adopted. For example, means in which, separate to the welding power source, a direct current power source with the negative electrode connected to the filler wire side and the positive electrode connected to the welding power source (minus side) is used can be adopted.

According to these means for controlling the current flowing through the filler wire, the amount of current flowing through the filler wire can be increased to a required value or at required times.

Consequently, according to the present invention, even in the case of the welding of steel, which has a high melting temperature, high-speed high-quality welding with a large welding amount becomes possible, and with the welding of aluminum, which has a low melting temperature, the welding speed can be further increased without applying restrictions that are disadvantageous in terms of practical usage such as setting an upper limit on the filler wire feeding rate as conventionally.

### BRIEF DESCRIPTION OF DRAWINGS

Fig. 1 is a schematic explanatory drawing of a conventional consumable electrode type arc welding apparatus;
Fig. 2 is a schematic explanatory drawing of a consumable electrode type arc welding apparatus according to the present invention;
Fig. 3 is a schematic explanatory drawing showing another constitution of the consumable electrode type arc welding apparatus according to the present invention; and
Fig. 4 is a schematic explanatory drawing showing another constitution of the consumable electrode type arc welding apparatus according to the present invention.

### BEST MODE FOR CARRYING OUT THE INVENTION

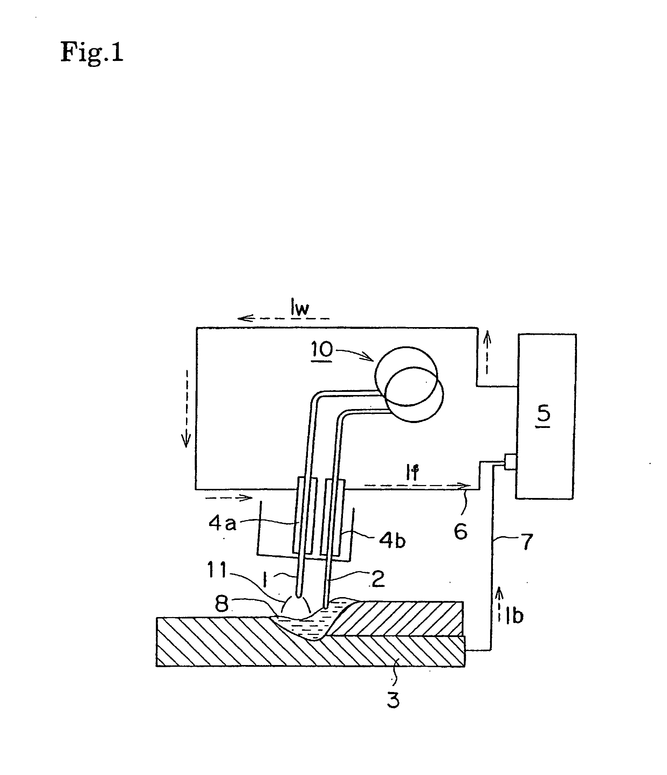

Describing the double wire type welding method, which is a prerequisite of the present invention, as shown in Fig. 1, a consumable electrode wire 1 is taken as the leading wire in the direction in which welding proceeds and a filler wire 2 is taken as the trailing wire, and the consumable electrode wire 1 and the filler wire 2 are arranged approximately in parallel. The consumable electrode wire 1 is fed in from a wire reel 10, passes through a power feeding terminal 4a, and is positioned facing a surface to be welded between a parent material 3 and a weld metal 12.

The welding current flows from a welding power source 5, via the power feeding terminal 4a, from the consumable electrode wire 1, through an arc 12 and a molten pool 8, and from the parent material 3 to an earth terminal of the welding power source 5 which are connected together by a parent material side earth wire 7.

Moreover, a power feeding terminal 4b, which is made to be in contact with the filler wire 2, and the earth terminal of the welding power source 5 are connected together electrically by a filler wire side earth wire 6, and part of the welding current flowing from the consumable electrode wire 1 to the parent material 3 is split off, passing through the molten pool 8 and the filler wire 2.

As shown in Fig. 1, in the case that the parent material 3 and the earth terminal of the welding power source 5 are electrically connected together directly by the parent material side earth wire 7, most of the welding current Iw becomes the current Ib flowing through the parent material 3, and the ratio of the current If that is split off into the filler wire 2 to the welding current Iw is extremely small.

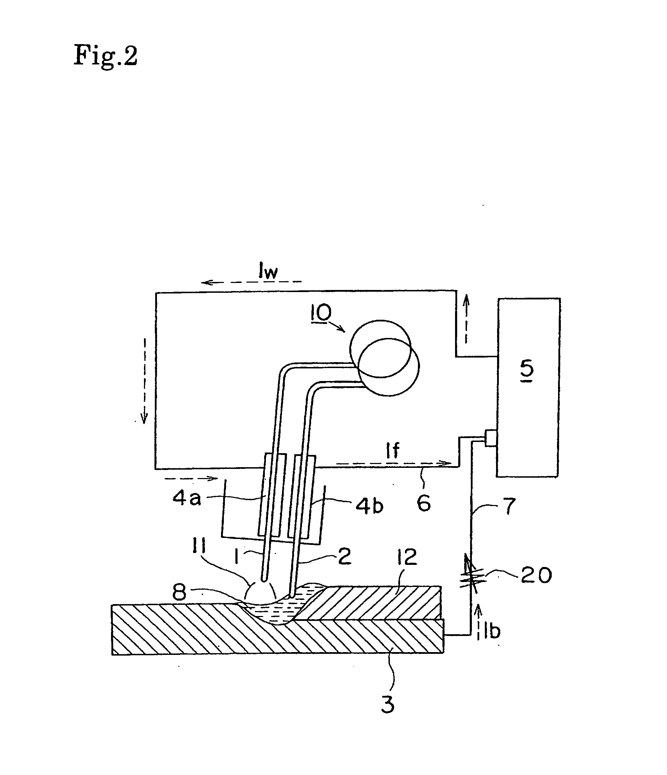

Consequently, as shown in Fig. 2, by disposing an electrical resistor 20 in the parent material side earth wire 7 that electrically connects the parent material 3 to the earth terminal of the welding power source 5, the current Ib flowing into the earth terminal of the welding power source 5 via the parent material 3 can be limited by the electrical resistor 20, and due to the potential difference arising between the two terminals of the electrical resistor 20, the ratio of the current If that is split off into the filler wire 2 to the welding current Iw can be raised.

Moreover, by making the electrical resistor 20 be a variable type instead of a fixed type, the ratio of the current If that is split off into the filler wire 2 can be changed at will.

Consequently, by increasing the split-off current, the amount of heat generation in the filler wire 2 increases, and thus even if the feeding rate of the filler wire 2 is increased there will not be a lack of Joule heat, and hence melt mixing of the filler wire 2 into the molten pool 8 can be carried out completely.

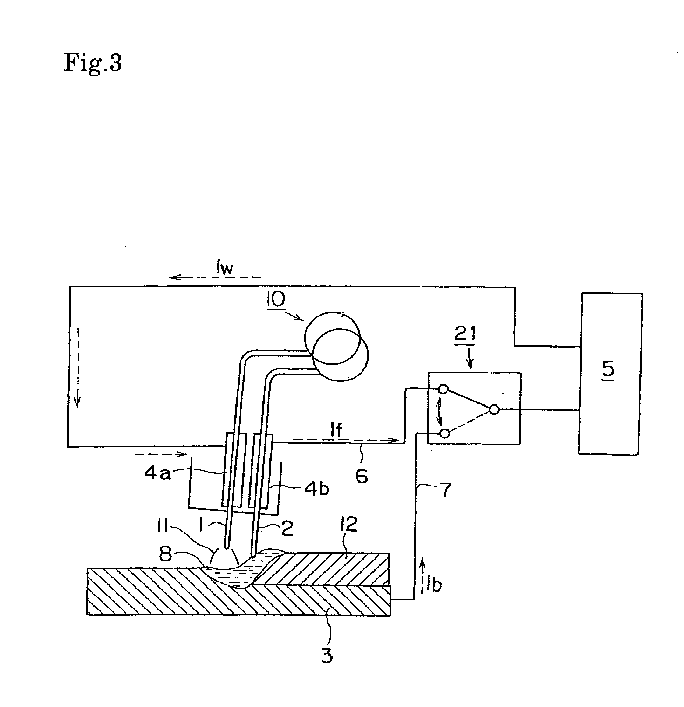

Moreover, as shown in Fig. 3, it is also possible to adopt a constitution in which the filler wire side earth wire 6 and the parent material side earth wire 7 are connected to a connection switcher 21, and hence connection and disconnection of these earth wires to the earth terminal of the welding power source 5 can be selected at will.

According to the connection switcher 21, the time for which the current Ib flows through the parent material side earth wire 7 can be set, and hence it becomes possible to select as appropriate the ratio of the time for which the current If that is split off into the filler wire 2 flows relative to the welding current Iw, and thus the split-off current can be increased and the amount of heat generation in the filler wire 2 increased at required times.

The connection switching means such as the connection switcher 21 for example changes the total amount of the current If that is split off into the filler wire 2 relative to the welding current Iw, and hence any publicly-known electrical device can be used so long as this device can give a function of it being possible to select at will the amount and/or time of the flow of the current Ib through the parent material side earth wire 7.

As examples of the constitution, connection switching means constituted from contacts that connect and disconnect mechanically, for example a distributor circuit, a relay circuit, or a connection switching circuit using a fluid conductor (such as mercury), or connection switching means constituted from an electronic circuit, for example a switching circuit using a vacuum tube device, a thyristor device, a MOS FET device, a transistor (GTO) device or the like, can be used.

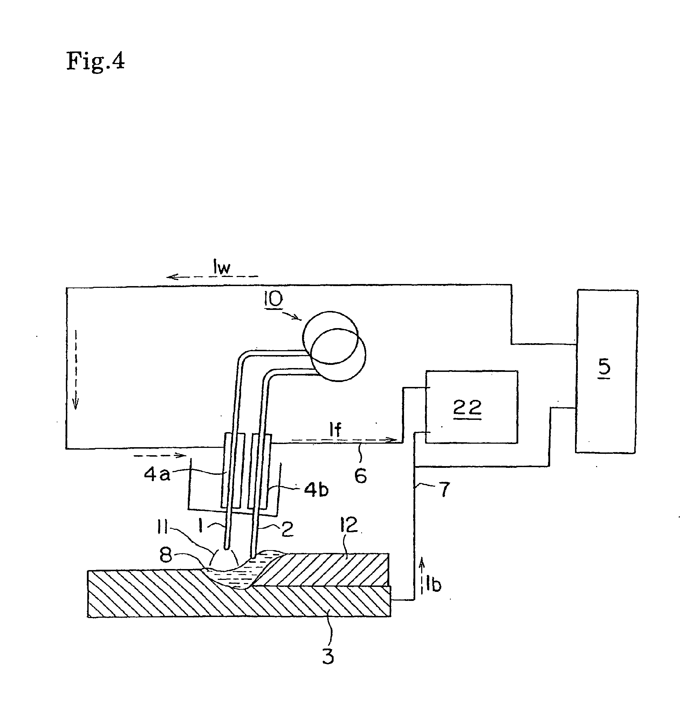

Furthermore, a separate power source can be used as voltage generation means for controlling the current flowing through the filler wire. That is, as shown in Fig. 4, in a constitution similar to that of Fig. 3 described above, by disposing a direct current power source 22 with the positive electrode connected to the welding power source 5 (minus side) and the negative electrode connected to the filler wire earth wire 6, the ratio of the current If, which flows through the filler wire 2 in the opposite direction to the consumable electrode wire, to the welding current Iw can be changed at will.

In addition to the case in which both the filler wire side earth current and the direct current due to a separate power source are passed through the filler wire 2 as described above, it is also possible to increase the current flowing through the filler wire and thus make the wire generate heat using only a separate power source, without passing a split-off current using an earth.

To sum up, with the present invention, by controlling the parent material side earth current flowing between the welding parent material and the welding power source earth terminal, or by using a separate direct current power source, welding is carried out while making various changes such as increasing the current flowing from the welding part into the filler wire; specifically, as in the embodiments, the characteristic feature is that there are earthing means from the welding parent material to the welding power source earth terminal and from the filler wire to the welding power source earth terminal, or a separate power source, and earth current control means for adjusting the parent material side earth current and controlling the filler wire side earth current is used.

Moreover, in the consumable electrode type arc welding method of the present invention, if the angle between the leading wire and the trailing wire is greater than 20°, then it will not be possible to insert the filler wire into the molten pool stably, and moreover if the arc length or the wire protrusion length fluctuate then the weld bead will become unstable, and hence it is preferable to make the angle between the leading wire and the trailing wire a maximum of 20°.

Regarding the angle of insertion of the leading wire and the trailing wire, if the angle of advance exceeds 50° then the molten metal will be scattered forwards by the arc force, and hence it is preferable for this angle to be a maximum of 50°. Moreover, if the angle of retreat exceeds 50° then the molten-metal will be scattered backwards by the arc force, sticking or the like will occur, the trailing filler wire will not enter the molten pool smoothly, and the welding will become unstable, and hence it is preferable for this angle to be a maximum of 50°.

If the distance between the tips of the leading wire and the trailing wire exceeds 20 times the square root of the welding speed, then the filler wire will not enter the molten pool smoothly, and the welding will become unstable, and hence it is preferable for this distance to be a maximum of 20 times the square root of the welding speed. Note that here the distance between the tips of the leading wire and the trailing wire means the distance between the part of the leading wire immediately below the arc and the part of the trailing wire in contact with the molten pool.

### EXAMPLE

### Example 1

Using low alloy steel plates of thickness 10mm, bead-on-plate gas-shielded arc welding was carried out using the consumable electrode type arc welding apparatus of the present invention shown in Fig. 2 and the conventional consumable electrode type arc welding apparatus shown in Fig. 1 under the welding conditions shown in Table 1, and then cross-section macro tests were carried out on the weld surfaces, and the welding quality was evaluated. The results are shown in Table 1.

As shown in Table 1, in the case of the method of the present invention using a consumable electrode type arc welding apparatus having an electrical resistor placed in the parent material side earth wire, the welding results according to the cross-section macro tests were good. Conversely, in the case of the conventional method and apparatus, welding defects occurred due to incomplete melt mixing of the weld metal.

**Table 1**

| | EXAMPLE OF THE PRESENT INVENTION | CONVENTIONAL EXAMPLE |
|---|---|---|
| SHIELDING GAS | 77.8%Ar+2.8%O₂+20%CO₂ | 77.8%Ar+2.8%O₂+20%CO₂ |
| SHIELDING GAS FLOW RATE | 25*l*/ min | 25*l*/ min |
| CONSUMABLE ELECTRODE WIRE ELECTRODE WIRE | JISZ3312 YGW11 WIRE DIAMETER 1.2mm | JISZ3312 YGW11 WIRE DIAMETER 1.2mm |
| FILLER WIRE | JISZ3312 YGW11 WIRE DIAMETER 1.2mm | JISZ3312 YGW11 WIRE DIAMETER 1.2mm |
| WELDING CURRENT Iw | 450A | 450A |
| WELDING SPEED | 1000mm / min | 1000mm / min |
| FILLER WIRE FEEDING RATE / CONSUMABLE ELECTRODE WIRE FEEDING RATE | 2.5 | 2.5 |
| ELECTRICAL RESISTOR | 0.03Ω | NONE |
| WELDING RESULTS (CROSS-SECTION MACRO TESTS) | GOOD | FUSION DEFECTS DUE TO POOR MIXING OF WELD METAL |

### Example 2

Using low alloy steel plates of thickness 15mm, bead-on-plate submerged arc welding was carried out using the consumable electrode type arc welding apparatus of the present invention shown in Fig. 2 and the conventional consumable electrode type arc welding apparatus shown in Fig. 1 under the welding conditions shown in Table 2, and then cross-section macro tests were carried out on the weld surfaces, and the welding quality was evaluated. The results are shown in Table 2.

As shown in Table 2, in the case of the method of the present invention using a consumable electrode type arc welding apparatus having an electrical resistor placed in the parent material side earth wire, the welding results according to the cross-section macro tests were good. Conversely, in the case of the conventional example, welding defects occurred due to incomplete melt mixing of the weld metal.

**Table 2**

| | EXAMPLE OF THE PRESENT INVENTION | CONVENTIONAL EXAMPLE |
|---|---|---|
| FLUX | MOLTEN FLUX FOR LOW ALLOY STEEL (JISZ3352 FS-FG3) | CONSUMABLE ELECTRODE WIRE (JISZ3352 FS-FG3) |
| CONSUMABLE ELECTRODE WIRE | JISZ3351 YS-S6 WIRE DIAMETER 4mm | JISZ3351 YS-S6 WIRE DIAMETER 4mm |
| FILLER WIRE | JISZ3351 YS-S6 WIRE DIAMETER 4mm | JISZ3351 YS-S6 WIRE DIAMETER 4mm |
| WELDING CURRENT Iw | 550A | 550A |
| WELDING SPEED | 1600mm/min | 1600mm/min |
| FILLER WIRE FEEDING RATE / CONSUMABLE ELECTRODE WIRE FEEDING RATE | 2.5 | 2.5 |
| ELECTRICAL RESISTOR | 0.03Ω | NONE |
| WELDING RESULTS (CROSS-SECTION MACRO TESTS) | GOOD | FUSION DEFECTS DUE TO POOR MIXING OF WELD METAL |

### Example 3

Using low alloy steel plates of thickness 10mm, bead-on-plate gas-shielded arc welding was carried out using the consumable electrode type arc welding apparatus of the present invention shown in Fig. 3 and the conventional consumable electrode type arc welding apparatus shown in Fig. 1 under the welding conditions shown in Table 3, and then cross-section macro tests were carried out on the weld surfaces, and the welding quality was evaluated. The results are shown in Table 3.

As shown in Table 3, in the case of the method of the present invention using a consumable electrode type arc welding apparatus having a connection switcher provided between the parent material and the filler wire and the earth terminal of the welding power source, the welding results according to the cross-section macro tests were good. Conversely, in the case of the conventional example, welding defects occurred due to incomplete melt mixing of the weld metal.

**Table 3**

| | EXAMPLE OF THE PRESENT INVENTION | CONVENTIONAL EXAMPLE |
|---|---|---|
| SHIELDING GAS | 77.8%Ar+2.8%O₂+20%CO₂ | 77.8%Ar+2.8%O₂+20%CO₂ |
| SHIELDING GAS FLOW RATE | 25*l*/min | 25*l*/min |
| CONSUMABLE ELECTRODE WIRE | JISZ3312 YGW11 WIRE DIAMETER 1.2mm | JISZ3312 YGW11 WIRE DIAMETER 1.2mm |
| FILLERWIRE | JISZ3312 YGW11 WIRE DIAMETER 1.2mm | JISZ3312 YGW11 WIRE DIAMETER 1.2mm |
| WELDING CURRENT Iw | 450A | 450A |
| WELDING SPEED | 1000mm/min | 1000mm/min |
| FILLER WIRE FEEDING RATE / CONSUMABLE ELECTRODE WIRE FEEDING RATE | 2.5 | 2.5 |
| CONNECTION SWITCHER | SWITCHING CIRCUIT USING TRANSISTOR DEVICE SWITCHING TIME PROPORTIONS: PARENT MATERIAL SIDE 70%, FILLER WIRE SIDE 30% SWITCHING TIME CYCLE: 100ms PER CYCLE (PARENT MATERIAL SIDE 70ms + FILLER WIRE SIDE 30ms) | NONE |
| WELDING RESULTS (CROSS-SECTION MACRO TESTS) | GOOD | FUSION DEFECTS DUE TO POOR MIXING OF WELD METAL |

### Example 4

Using low alloy steel plates of thickness 15mm, bead-on-plate submerged arc welding was carried out using the consumable electrode type arc welding apparatus of the present invention shown in Fig. 3 and the conventional consumable electrode type arc welding apparatus shown in Fig. 1 under the welding conditions shown in Table 4, and then cross-section macro tests were carried out on the weld surfaces, and the welding quality was evaluated. The results are shown in Table 4.

As shown in Table 4, in the case of the method of the present invention using a consumable electrode type arc welding apparatus having a connection switcher provided between the parent material and the filler wire and the earth terminal of the welding power source, the welding results according to the cross-section macro tests were good. Conversely, in the case of the conventional example, welding defects occurred due to incomplete melt mixing of the weld metal.

**Table 4**

| | EXAMPLE OF THE PRESENT INVENTION | CONVENTIONAL EXAMPLE |
|---|---|---|
| FLUX | MOLTEN FLUX FOR LOW ALLOY STEEL (JISZ3352 FS-FG3) | MOLTEN FLUX FOR LOW ALLOY STEEL (JISZ3352 FS-FG3) |
| CONSUMABLE ELECTRODE WIRE | JISZ3351 YS-S6 WIRE DIAMETER 4mm | JISZ3351 YS-S6 WIRE DIAMETER 4mm |
| FILLER WIRE | JISZ3351 YS-S6 WIRE DIAMETER 4mm | JISZ3351 YS-S6 WIRE DIAMETER 4mm |
| WELDING CURRENT Iw | 550A | 550A |
| WELDING SPEED | 1500mm/min | 1500mm/min |
| FILLER WIRE FEEDING RATE / CONSUMABLE ELECTRODE WIRE FEEDING RATE | 2.5 | 2.5 |
| SWITCHING CIRCUIT USING TRANSISTOR DEVICE | SWITCHING TIME PROPORTIONS: PARENT MATERIAL SIDE 70%, FILLER WIRE SIDE 30% SWITCHING TIME CYCLE: 100ms PER CYCLE (PARENT MATERIAL SIDE 70ms + FILLER WIRE SIDE 30ms) | NONE |
| FUSION DEFECTS DUE TO POOR MIXING OF WELD METAL | GOOD | FUSION DEFECTS DUE TO POOR MIXING OF WELD METAL |

### Example 5

Using low alloy steel plates of thickness 10mm, bead-on-plate gas-shielded arc welding was carried out using the consumable electrode type arc welding apparatus of the present invention shown in Fig. 4 and the conventional consumable electrode type arc welding apparatus shown in Fig. 1 under the welding conditions shown in Table 5, and then cross-section macro tests were carried out on the weld surfaces, and the welding quality was evaluated. The results are shown in Table 5.

As shown in Table 5, in the case of the method of the present invention using a consumable electrode type arc welding apparatus in which a separate direct current power source was disposed with the positive electrode connected to the welding power source (minus side) and the negative electrode connected to the filler wire side earth wire, the welding results according to the cross-section macro tests were good. Conversely, in the case of the conventional method and apparatus, welding defects occurred due to incomplete melt mixing of the weld metal.

**Table 5**

| | EXAMPLE OF THE PRESENT INVENTION | CONVENTIONAL EXAMPLE |
|---|---|---|
| SHIELDING GAS | 77.8%Ar+2.8%O₂+20%CO₂ | 77.8%Ar+2.8%O₂+20%CO₂ |
| SHIELDING GAS FLOW RATE | 25*l*/min | 25*l*/min |
| CONSUMABLE ELECTRODE WIRE | JISZ3312 YGW11 WIRE DIAMETER 1.2mm | JISZ3312 YGW11 WIRE DIAMETER 1.2mm |
| FILLERWIRE | JISZ3312 YGW11 WIRE DIAMETER 1.2mm | JISZ3312 YGW11 WIRE DIAMETER 1.2mm |
| WELDING CURRENT Iw | 450A | 450A |
| WELDING SPEED | 1000mm/min | 1000mm/min |
| FILLER WIRE FEEDING RATE / CONSUMABLE ELECTRODE WIRE FEEDING RATE | 2.5 | 2.5 |
| FILLER WIRE SIDE CURRENT If | 100A (DIRECT CURRENT POWER SOURCE OUTPUT SETTING 100A) | 10A |
| WELDING RESULTS (CROSS-SECTION MACRO TESTS) | GOOD | FUSION DEFECTS DUE TO POOR MIXING OF WELD METAL |

### Example 6

Bead-on-plate submerged arc welding was carried out on low alloy steel plates of thickness 15mm using the consumable electrode type arc welding apparatus of the present invention shown in Fig. 4 and the conventional consumable electrode type arc welding apparatus shown in Fig. 1 under the welding conditions shown in Table 6, and then cross-section macro tests were carried out on the weld surfaces, and the welding quality was evaluated. The results are shown in Table 6.

As shown in Table 6, in the case of the method of the present invention using a consumable electrode type arc welding apparatus in which a direct current power source was disposed with the positive electrode connected to the welding power source (minus side) and the negative electrode connected to the filler wire side earth wire, the welding results according to the cross-section macro tests were good. Conversely, in the case of the conventional method and apparatus, welding defects occurred due to incomplete melt mixing of the weld metal.

**Table 6**

| | EXAMPLE OF THE PRESENT INVENTION | CONVENTIONAL EXAMPLE |
|---|---|---|
| FLUX | MOLTEN FLUX FOR LOW ALLOY STEEL (JISZ3352 FS-FG3) | MOLTEN FLUX FOR LOW ALLOY STEEL (JISZ3352 FS-FG3) |
| CONSUMABLE ELECTRODE WIRE | JISZ3351 YS-S6 WIRE DIAMETER 4mm | JISZ3351 YS-S6 WIRE DIAMETER 4mm |
| FILLER WIRE | JISZ3351 YS-S6 WIRE DIAMETER 4mm | JISZ3351 YS-S6 WIRE DIAMETER 4mm |
| WELDING CURRENT Iw | 550A | 550A |
| WELDING SPEED | 1600mm/min | 1600mm/min |
| FILLER WIRE FEEDING RATE/ CONSUMABLE ELECTRODE WIRE FEEDING RATE | 2.5 | 2.5 |
| FILLER WIRE SIDE CURRENT If | 100A (DIRECT CURRENT POWER SOURCE OUTPUT SETTING 100A) | 10A |
| WELDING RESULTS (CROSS-SECTION MACRO TESTS) | GOOD | FUSION DEFECTS DUE TO POOR MIXING OF WELD METAL |

### INDUSTRIAL APPLICABILITY

With the consumable electrode type arc welding apparatus of Fig. 2 according to the present invention, an electrical resistor is placed between the parent material and the earth terminal of the welding power source, thus limiting the current flowing into the earth terminal of the welding power source via the parent material, and hence enabling the ratio of the current split off into the filler wire to the welding current to be raised due to the potential difference arising between the two terminals of the electrical resistor; the welding speed can thus be increased, without for example applying restrictions that are disadvantageous in terms of practical usage on the upper limit of the filler wire feeding rate.

With the consumable electrode type arc welding apparatus of Fig. 3 according to the present invention, by providing a connection switcher between the parent material and the filler wire and the earth terminal of the welding power source, for a certain time in each cycle the filler wire is connected to the earth terminal of the welding power source, and thus Joule heat is generated in the filler wire, which is fed into the molten pool, and for the rest of the time the parent material is connected to the earth terminal of the welding power source; even if the filler wire feeding rate is large, melt mixing of the filler wire into the molten pool can thus be carried out completely, and hence the welding speed can be increased, without applying restrictions that are disadvantageous in terms of practical usage on the upper limit of the filler wire feeding rate.

With the consumable electrode type arc welding apparatus of Fig. 4 according to the present invention, by providing a direct current power source with the negative electrode connected to the filler wire side and the positive electrode connected to the welding power source (minus side), the current flowing from the welding part into the filler wire can be increased, and hence Joule heat is generated in the filler wire, which is fed into the molten pool; even if the filler wire feeding rate is large, melt mixing of the filler wire into the molten pool can thus be carried out completely, and hence the welding speed can be increased as with the apparatus described previously.

## Claims

1. A consumable electrode type arc welding method, wherein a consumable electrode wire as a leading wire and a filler wire as a trailing wire in a direction in which welding proceeds are arranged in parallel, the filler wire is inserted into a molten pool and melted, an earth current flowing between a parent material and a welding power source earth terminal is controlled, and welding is carried out with the amount of current led through the filler wire via the molten pool being changed.

2. A consumable electrode type arc welding method, wherein a consumable electrode wire as a leading wire and a filler wire as a trailing wire in a direction in which welding proceeds are arranged in parallel, the filler wire is inserted into a molten pool and melted, separate power source means is provided for passing a current through the filler wire to generate heat, and welding is carried out with the amount of the current flowing through the filler wire being changed at will.

3. A consumable electrode type arc welding apparatus, comprising a constitution in which a consumable electrode wire as a leading wire and a filler wire as a trailing wire in a direction in which welding proceeds are arranged in parallel and the filler wire is inserted into a molten pool and melted, earthing means for connecting from a parent material to a welding power source earth terminal and from the filler wire to the welding power source earth terminal, and earth current control means for controlling the amount of current flowing through the earthing means from the parent material to the welding power source.

4. The consumable electrode type arc welding apparatus according to claim 3, wherein the earth current control means is a fixed or variable electrical resistor disposed in an earth circuit between the welding parent material and the welding power source earth terminal.

5. The consumable electrode type arc welding apparatus according to claim 3, wherein the earth current control means is a connection switcher between a parent material side earth circuit or a filler wire side earth circuit and the welding power source earth terminal.

6. A consumable electrode type arc welding apparatus, having a constitution in which a consumable electrode wire as a leading wire and a filler wire as a trailing wire in a direction in which welding proceeds are arranged in parallel and the filler wire is inserted into a molten pool and melted, earthing means for connecting from a parent material to a welding power source earth terminal, and separate power source means for passing a current through the filler wire to generate heat.

7. The consumable electrode type arc welding apparatus according to claim 6, wherein the separate power source means is a direct current power source with the positive electrode connected to the minus side of the welding power source and the negative electrode connected to a filler wire side earth wire.
